(19) Europäisches Patentamt
European Patent Office
Office européen des brevets

(11) **EP 3 111 417 B1**

(12) **EUROPÄISCHE PATENTSCHRIFT**

(45) Veröffentlichungstag und Bekanntmachung des Hinweises auf die Patenterteilung:
**13.03.2019 Patentblatt 2019/11**

(21) Anmeldenummer: **15741800.5**

(22) Anmeldetag: **24.03.2015**

(51) Int Cl.:
*G06T 5/00* (2006.01)     *G06T 5/50* (2006.01)
*G06T 11/00* (2006.01)     *G06T 5/20* (2006.01)

(86) Internationale Anmeldenummer:
**PCT/EP2015/056272**

(87) Internationale Veröffentlichungsnummer:
**WO 2015/154990 (15.10.2015 Gazette 2015/41)**

(54) **RAUSCHREDUKTION IN TOMOGRAMMEN**

REDUCING NOISE IN TOMOGRAPHIC IMAGES

REDUCTION DE BRUIT DANS DES IMAGES TOMOGRAPHIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.04.2014 DE 102014206720**

(43) Veröffentlichungstag der Anmeldung:
**04.01.2017 Patentblatt 2017/01**

(73) Patentinhaber: **Siemens Healthcare GmbH 91052 Erlangen (DE)**

(72) Erfinder:
• **SCHRAPP, Michael Johannes 80803 München (DE)**
• **DENNERLEIN, Frank 91301 Forschheim (DE)**
• **SCHÖRNER, Karsten 80802 München (DE)**
• **GOLDAMMER, Matthias 80687 München (DE)**
• **STEPHAN, Jürgen 82178 Puchheim (DE)**

(56) Entgegenhaltungen:
DE-A1-102006 046 191     US-A1- 2008 069 294
US-A1- 2009 252 430     US-A1- 2011 116 594
US-B1- 8 233 586

**Beschreibung**

Die Erfindung betrifft ein Verfahren zum Reduzieren von Rauschen bei einer Tomogramm- und/oder Volumendarstellung eines Objekts wie z.B. eines Bauteils oder eines Organs eines menschlichen Körpers. Es muss hierbei zwischen dem Rauschen einerseits und Streustrahlungsartefakten sowie darzustellenden Strukturen des Objekts andererseits unterschieden werden. Grundlage für die Korrektur sind mehrere streustrahlungsbehaftete Projektionsbilddatensätze, wie sie beispielsweise mit einem Computertomographen erzeugt worden sein können.

DE 10 2006 046191 A1 beschreibt ein Verfahren zur Korrektur von Streustrahlungsfehlern bei der Radiografie und der Computertomografie, jeweils mit Flächendetektoren. Es findet zunächst eine Schätzung einer Streustrahlungsverteilung statt und danach wird ein Standardkorrekturterm berechnet.

US 2009/0252430 A1 beschreibt ein Verfahren zur simultanen Optimierung eines digitalen Bilds, welches in einem streuenden Medium aufgenommen wird. Das digitale Bild wird gemäß einer objektiven Bildqualität-Metrik bewertet, wodurch ein Bildqualitätswert resultiert, welcher mit einem früher für das Bild abgespeicherten Bildqualitätswert verglichen wird. Es wird eine überarbeitete optische Transferfunktion durch Modellieren der optischen Eigenschaften des Mediums abgeleitet, um ein wiederhergestelltes digitales Bild zu erzeugen. Das wiederhergestellte digitale Bild ist abgeleitet von dem originalen Bild und der überarbeiteten optischen Transferfunktion. Weiterhin wird das wiederhergestellte digitale Bild gemäß der objektiven Bildqualität-Metrik als ein optimiertes wiederhergestelltes Bild identifiziert.

In der Röntgen-Computertomographie (CT) können Rauschen und Streustrahlung erhebliche Artefakte im rekonstruierten Tomogramm oder digitalen Volumenmodell des Objekts verursachen. Eine Reihe von Verfahren zur Streustrahlenkorrektur verwendet einen differenzbasierten Ansatz, bei welchem durch Messungen oder Simulationen ermittelt wird, welche Streustrahlungsartefakte sich in den einzelnen Projektionsbilddatensätzen befinden. Das gemessene oder simulierte Streusignal, d.h. der Streuanteil in den Projektionen, wird dann von den einzelnen Projektionsbildern subtrahiert. Die streustrahlungskorrigierten Projektionsbilder haben jedoch ein geringeres Signal-Rausch-Verhältnis (SNR - Signal-Noise-Ratio) und führen in der anschließenden Rekonstruktion, das heißt bei der Berechnung eines Tomogramms oder Volumenmodells, zu einem deutlich größeren Bildrauschen. Die beschriebenen, subtraktionsbasierten a-posteriori-Korrekturen der Streustrahlung können beispielsweise auf einer Monte-Carlo-Simulation, deterministischen Berechnungen der Streuung erster Ordnung oder Faltungsalgorithmen basierend auf Point-Spread-Funktionen beruhen. Es kann auch beispielsweise auf der Grundlage von Phantomkörpern die Verteilung des Streuanteils auf dem Strahlendetektor gemessen werden.

Die bekannten Verfahren haben den Nachteil, dass lediglich das großflächige, das heißt räumlich niederfrequente Streusignal geschätzt werden kann und sich das Signal-Rausch-Verhältnis in den korrigierten Projektionen durch die Differenzbildung aus gemessenem Signal und dem Streusignal verschlechtert, das heißt abnimmt. Dies wirkt sich sichtbar im rekonstruierten Tomogramm oder Volumenmodell aus, wodurch die Detailerkennbarkeit von Strukturen des abgebildeten Objekts verloren gehen kann. Diese Strukturinformationen können wichtige Primärinformationen sein, die es zu erhalten gilt, wenn bei einer Tomogramm- oder Volumendarstellung des Objekts die Streustrahlungsartefakte vermindert werden.

Der Erfindung liegt die Aufgabe zugrunde, das bei der Korrektur von Streustrahlungsartefakten entstehende oder hervortretende Rauschen zu reduzieren.

Die Aufgabe wird durch die Gegenstände der unabhängigen Patentansprüche gelöst. Vorteilhafte Weiterbildungen der Erfindung ergeben sich durch die Merkmale der Unteransprüche.

Erfindungsgemäß wird von den eingangs beschriebenen mehreren streustrahlungsbehafteten Projektionsbilddatensätzen eines Objekts ausgegangen. Mit streustrahlungsbehaftet ist streustrahlungsartefaktbehaftet oder mit anderen Worten artefaktbehaftet gemeint. Jeder Projektionsbilddatensatz kann dabei jeweils eine Projektion des Objekts aus jeweils einem anderen Projektionswinkel darstellen und kann 2D-Projektionsdaten zu einzelnen Bildpunkten des Projektionsbildes umfassen. Solche Projektionen lassen sich beispielsweise mit einem Röntgen-C-Bogen-Computertomographen erzeugen. Bei dem erfindungsgemäßen Verfahren wird aus solchen streustrahlungsbehafteten Projektionsbilddatensätzen zumindest ein streustrahlungsbehaftetes Tomogramm gebildet. Mit anderen Worten wird zunächst der Streustrahlenanteil beibehalten oder ignoriert und die Projektionsbilddatensätze zu einem einzelnen Tomogramm oder zu mehreren Tomogrammen, das heißt einem Volumenmodell, kombiniert oder verknüpft. Dies kann beispielsweise mittels der bekannten Rückprojektion oder dem Feldkamp-Algorithmus erreicht werden. Zusätzlich wird mittels einer vorgegebenen Korrekturmethode, z.B. einer, wie sie eingangs beschrieben wurde (z.B. Strahlaufhärtung) und aus dem Stand der Technik bekannt ist, zumindest ein vorläufiges streustrahlungskorrigiertes Tomogramm gebildet. Mit anderen Worten wird eine erste Korrektur an den einzelnen Projektionsbilddatensätzen vorgenommen, was aber bei einer anschließenden Rekonstruktion in der eingangs beschriebenen Weise zu streustrahlungskorrigierten Tomogrammen führt, die ein geringeres SNR aufweisen, also ein deutlicheres Rauschen.

Erfindungsgemäß wird nun das Rauschen auf der Grundlage eines im streustrahlungsbehafteten Tomogramm abgebildeten Kantenverlaufs des Objekts in dem mindestens einen streustrahlungskorrigierten Tomogramm oder in einer die Streustrahlungsartefakte beschreibenden Artefaktkarte selektiv mittels eines Filters geglättet. Dies weist den Vorteil auf, dass Primärinformationen aus dem mindestens einen streustrahlungsbehafteten Tomogramm genutzt werden, wo sie mit einem besseren SNR vorliegen als nach der Streustrahlungskorrektur. Mit Kantenverlauf ist im Zusammenhang mit der Erfindung allgemein die anhand der Projektionsbilddatensätze abgebildete Struktur des Objekts gemeint, also sowohl ein äußerer Rand als auch Kantenverläufe innerhalb des Objekts. Unter Glättung ist im Zusammenhang mit der Erfindung eine Verringerung der räumlichen oder örtlichen Helligkeitsdynamik, das heißt eine Tiefpassfilterung der örtlichen oder räumlichen Frequenz des Helligkeitsverlaufs zu verstehen. Bei dem Objekt kann es sich z.B. um ein Organ oder mehrere Organe eines Körpers eines Menschen oder Tieres handeln oder um ein Bauteil oder eine Materialprobe.

Gemäß einer Variante des erfindungsgemäßen Verfahrens wird zum Glätten des Rauschens das streustrahlungskorrigierte Tomogramm mittels eines adaptiven Filters in Abhängigkeit von dem Kantenverlauf regionsspezifisch geglättet. Regionsspezifisch meint, dass Regionen in dem streustrahlungskorrigierten Tomogramm, in denen sich Kanten befinden, die aufgrund der Struktur des Objekts vorhanden sind, weniger stark geglättet werden als homogene Regionen, in denen keine oder nur so geringe strukturbedingten Kanten vorhanden sind, dass z.B. Streustrahlungsartefakte überwiegen.

Diese erste Variante der Erfindung weist den Vorteil auf, dass eine adaptive Glättung des streustrahlungskorrigierten Tomogramms bereitgestellt wird, die auch die Strukturinformationen aus dem mindestens einen unkorrigierten, das heißt streustrahlungsbehafteten Tomogramm nutzt. Gegenüber Verfahren, die ausschließlich den korrigierten Datensatz als Basis einer Filterung zur Rauschunterdrückung verwenden, kann eine Kantenerkennung auch in Bildteile mit geringem Kontrast-Rausch-Verhältnis oder SNR erreicht werden, da das unkorrigierte Volumen oder Tomogramm ein deutlich geringeres Rauschen aufweist, sodass Strukturinformationen zuverlässiger erkannt und genutzt werden können.

Als adaptives Filter kann jedes Filter verwendet werden, dessen Glättungsgrad über ein oder mehrere Parameter eingestellt werden können. Als besonders geeignet hat sich ein Total-Variance-Filter erwiesen, mit dem auch ein dreidimensionales Volumenmodell des Objekts unter Ausnutzung dreidimensionaler Strukturinformationen über das Objekt geglättet werden können.

Um das adaptive Filter steuern zu können, wird bevorzugt zum Adaptieren des Filters eine Glättungsmaske erzeugt, welche für mehrere unterschiedliche Pixel (Bildelemente - Picture Elements) oder Voxel (Volumenelemente - Volume Elements) des streustrahlungskorrigierten Tomogramms oder der mehreren streustrahlungskorrigierten Tomogramme einen Glättungsgrad vorgibt, also einen Wert, welcher besagt, wie stark Helligkeitsunterschiede zwischen benachbarten Pixeln oder Voxeln ausgeglichen werden sollen.

Eine besonders zuverlässige Methode zum Bilden einer solchen Glättungsmaske ist gemäß einer Ausführungsform des Verfahrens gegeben, indem Gradientenwerte jedes streustrahlungsbehafteten Tomogramms und/oder jedes streustrahlungskorrigierten Tomogramms gebildet werden.

Alternativ zur Glättung des streustrahlungskorrigierten Tomogramms selbst ist gemäß einer zweiten Variante des Verfahrens eine mittels des streustrahlungskorrigierten Tomogramms gebildete Artefaktkarte bei der Glättung zugrunde gelegt, das heißt es wird zunächst eine Artefaktkarte geschätzt, welche beschreibt, wo in dem mindestens einen streustrahlungsbehafteten Tomogramm Streustrahlungsartefakte vorliegen. Es wird dann diese Schätzung, das heißt die Artefaktkarte, geglättet, um hierdurch die Schätzung der Streustrahlungsartefakte zu verbessern.

Hierzu sieht eine Ausführungsform des Verfahrens vor, dass zum Bilden der Artefaktkarte jeweils das mindestens eine streustrahlungsbehaftete Tomogramm und das jeweils korrespondierende mindestens eine streustrahlungskorrigierte Tomogramm voneinander subtrahiert werden und anschließend diese (ungeglättete) Artefaktkarte mittels eines Filters geglättet wird. Um hieraus dann eine verbesserte Abbildung des Objekts zu erhalten, wird bevorzugt ein rauschreduziertes und streustrahlungskorrigiertes neues Tomogramm durch Subtrahieren der gefilterten Artefaktkarte von dem mindestens einen streustrahlungsbehafteten Tomogramm gebildet.

Alternativ wird gemäß einer anderen Ausführungsform die Artefaktkarte aus Messungen, die den Projektionsbilddatensätzen vorangegangen sind, oder aus einem von den Projektionsbilddatensätzen verschiedenen Datensatz, insbesondere einem Konstruktionsdatensatz eines Computertomographen gewonnen. Der Konstruktionsdatensatz kann z.B. ein CAD-Plan (CAD - Computer Aided Design) sein. Dies weist den Vorteil auf, dass das Objekt zum Ermitteln der Artefaktkarte nicht benötigt wird und somit die Artefaktkarte im Voraus und unabhängig vom Objekt erstellt werden kann.

Wie bereits ausgeführt, kann zum Bilden des zumindest einen vorläufigen streustrahlungskorrigierten Tomogramms als Korrekturmethode eine an sich aus dem Stand der Technik bekannte Methode verwendet werden. Bevorzugt wird z.B. eine subtraktionsbasierte Streustrahlungskorrektur verwendet, mittels welcher von den Projektionsbilddatensätzen ein geschätztes Streusignal subtrahiert wird. Diese Verfahren erlauben eine zuverlässige erste Schätzung der Streustrahlungsartefakte, von der mittels des erfindungsgemäßen Verfahrens ausgegangen werden kann, um eine verbesserte Schätzung auf der Grundlage der regionsspezifischen Glättung zu erhalten.

In der bisherigen Beschreibung der Erfindung wurde zwischen einer Darstellung des Objekts einerseits und den Tomogrammen andererseits unterschieden. Grund hierfür ist, dass das geglättete streustrahlungskorrigierte Tomogramm beziehungsweise das gerade beschriebene rauschreduzierte und streustrahlungskorrigierte neue Tomogramm, wie es mittels der gefilterten Artefaktkarte gebildet wird, nicht unbedingt die letztendliche Darstellung des Objekts sein muss. Vielmehr ist bevorzugt vorgesehen, dass die letztendliche Tomogramm- oder Volumendarstellung ermittelt wird, indem das streustrahlungskorrigierte Tomogramm mittels einer iterativen Rekonstruktionsmethode auf der Grundlage der Projektionsbilddatensätze gebildet wird und bei mehreren oder allen Iterationsschritten oder Iterationen dieser Rekonstruktionsmethode mittels des Filters das jeweilige Zwischenergebnis, das heißt das streustrahlungskorrigierte Tomogramm oder eine zugehörige Artefaktkarte geglättet wird. Im letzteren Fall wird dabei jeweils das neue Tomogramm mittels der Artefaktkarte berechnet und der nachfolgenden Iteration zugrunde gelegt.

Als geeignete iterative Konstruktionsmethoden haben sich ART-Methoden (ART - algebraische Rekonstruktionstechnik), SART-Methoden (SART - simultane algebraische Rekonstruktionstechnik) und statistische Verfahren, wie beispielsweise eine Maximum-Likelihood-Rekonstruktion, erwiesen. Iterative Verfahren haben bei der Verwendung von Glättungsfiltern gegenüber Verfahren basierend auf der Rückprojektion (beispielsweise der gefilterten Rückprojektion und dem Feldkamp-Algorithmus) den Vorteil, dass sie nach jedem Iterationsschritt erneut auf die Primärinformation aus den gemessenen Projektionsbilddatensätzen zurückgreifen und somit zuvor zu stark geglättete Strukturen, die also versehentlich anstelle von z.B. Streustrahlungsartefakten oder anderen, unerwünschten Primärinformationen weggeglättet wurden, korrigiert werden können, damit sie wieder besser erkennbar sind.

Wie bereits aufgeführt, ist das erfindungsgemäße Verfahren nicht auf eine Streustrahlenkorrektur in einzelnen Tomogrammen beschränkt. Die Tomogramme sind gemäß einer bevorzugten Ausführungsform des Verfahrens aus einem streustrahlungsbehafteten und einem streustrahlungskorrigierten Volumenmodell entnommen, so dass letzteres hierdurch ebenfalls in der Abbildungsgenauigkeit verbessert wird.

Zu der Erfindung gehört auch ein Computertomograph mit einer Strahlenquelle zum Bestrahlen eines Objekts aus unterschiedlichen Projektionswinkeln. Der Computertomograph kann beispielsweise röntgenbasiert sein, also die Strahlenquelle eine Röntgenquelle sein, oder aber auch beispielsweise positronenbasiert. Des Weiteren weist der erfindungsgemäße Computertomograph einen Strahlendetektor zum Detektieren der Strahlen und Erzeugen mehrerer Projektionsbilddatensätze des durchleuchteten Objekts auf. Ein solcher Strahlendetektor kann beispielsweise ein Röntgenflachdetektor sein.

Erfindungsgemäß ist bei dem Computertomograph vorgesehen, dass eine Analyseeinrichtung dazu ausgelegt ist, auf der Grundlage der Projektionsdatensätze eine Ausführungsform des erfindungsgemäßen Verfahrens durchzuführen. Der erfindungsgemäße Computertomograph erzeugt hierdurch in vorteilhafter Weise bei der Rekonstruktion, das heißt der Berechnung der Tomogrammdarstellung oder 3D-Volumendarstellung des Objekts, ein streustrahlungskorrigiertes Volumen oder ein streustrahlungskorrigiertes Tomogramm, welches ein besseres Rauschverhalten zeigt als es sich ohne die erfindungsgemäße Rauschreduktion ergibt.

Die Anwendung des Verfahrens ist aber ausdrücklich nicht nur auf die Aufbereitung von CT-Projektionsdaten beschränkt, sondern kann auch zur Rauschminderung in jeglichen Projektionsdaten erfolgen.

Im Folgenden ist ein Ausführungsbeispiel der Erfindung beschrieben. Hierzu zeigt:

FIG 1    eine schematische Darstellung einer Ausführungsform des erfindungsgemäßen Computertomographen,

FIG 2    eine Skizze zur Veranschaulichung einer ersten Ausführungsform des erfindungsgemäßen Verfahrens, wie es der Computertomograph von FIG 1 durchführen kann, und

FIG 3    eine Skizze zur Veranschaulichung einer zweiten Ausführungsform des erfindungsgemäßen Verfahrens, wie es der Computertomograph von FIG 1 durchführen kann.

Bei dem im Folgenden erläuterten Ausführungsbeispiel handelt es sich um eine bevorzugte Ausführungsform der Erfindung. Bei dem Ausführungsbeispiel stellen aber die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

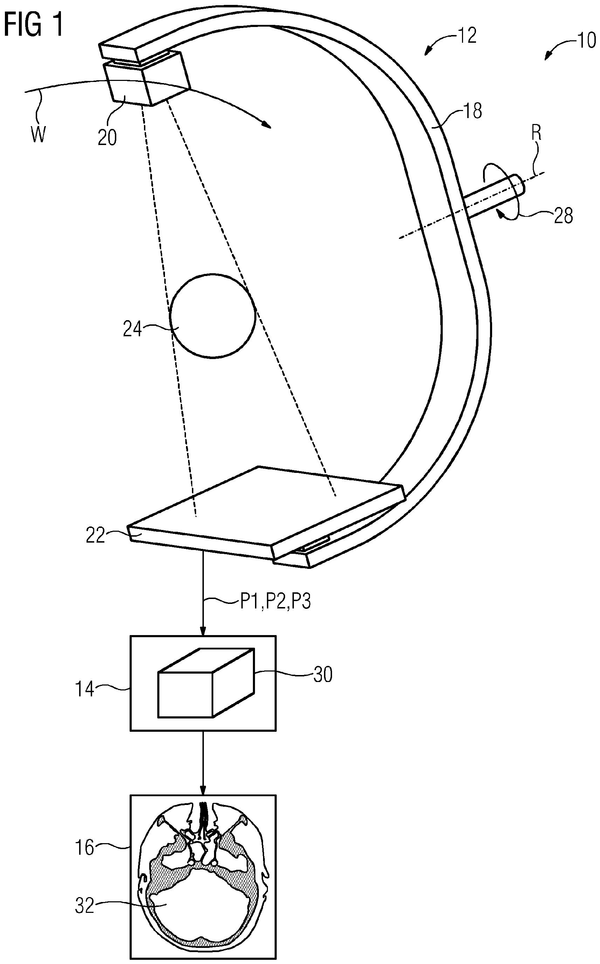

FIG 1 zeigt eine Ausführungsform des erfindungsgemäßen Computertomographen oder kurz Tomographen 10, der ein Röntgensystem 12, eine Analyseeinrichtung 14 und eine Anzeigeeinrichtung 16, beispielsweise einen Bildschirm, aufweisen kann. Das Röntgensystem 12 kann beispielsweise ein Röntgen-C-Bogen-System sein, das einen um eine Rotationsachse R rotierbar gelagerten C-Bogen 18 aufweisen kann, an welchem an einem Ende eine Röntgenquelle 20 und an einem gegenüberliegenden Ende ein Röntgendetektor 22, beispielsweise ein Röntgenflachdetektor, angeordnet sein kann. Die Analyseeinrichtung 14 kann beispielsweise eine Prozessoreinrichtung, wie beispielsweise ein Digitalrechner oder Computer, sein.

Mittels des Tomographen 10 kann beispielsweise ein Körper eines Patienten untersucht werden. In dem gezeigten Beispiel ist zur Veranschaulichung ein Kopf 24 des Patienten dargestellt. Das durchstrahlte Objekt kann aber auch dem nichthumanen Bereich entstammen. Es können z.B. Bauteile oder Materialien oder Chemikalien durchstrahlt und dargestellt werden.

Mit dem Röntgensystem 12 kann aus unterschiedlichen Projektionswinkeln jeweils eine Röntgenaufnahme durch Betreiben der Röntgenquelle 20 und Empfangen der Projektion des Kopfes 24 mittels des Röntgendetektors 22 gewonnen werden. Hierzu kann der C-Bogen 18 zum Bewegen der Röntgenquelle 20 entlang eines Verfahrwegs W und zum Ansteuern der Projektionswinkel um die Rotationsachse R in einer Rotationsbewegung 28 in einem gewünschten Winkelintervall von beispielsweise 0 Grad bis 200 Grad gedreht werden und an den passenden Winkelpositionen eine jeweilige Aufnahme des Kopfes 24 erzeugt werden.

Durch jede Aufnahme erzeugt der Röntgendetektor 22 jeweilige 2D-Röntgenbilddaten P1, P2, P3, die an die Analyseeinrichtung 24 übertragen werden. Die Aufnahmen, das heißt die Röntgenbilddaten P1, P2, P3 und die zu den weiteren Projektionswinkeln erzeugten Röntgenbilddaten, die zu einem einzelnen Durchlauf, das heißt einer Rotationsbewegung 28, gehören, werden durch die Analyseeinrichtung 24 beispielsweise mittels einer Rückprojektion oder Feldkamp-Rekonstruktion zu einem 3D-Volumenmodell 30 kombiniert, welches zu einzelnen Volumenelementen des Kopfes 24 dessen Absorptionseigenschaft oder Dämpfungseigenschaft bezüglich der Röntgenstrahlung der Röntgenquelle 20 angibt. Eine Einheit für einen solchen Dämpfungswert ist beispielsweise HU (Hounsfield Unit).

Aus dem Volumenmodell 30 kann beispielsweise ein Tomogramm 32 des Kopfes 24 gebildet werde, dass mittels der Anzeigeeinrichtung 16 angezeigt werden kann.

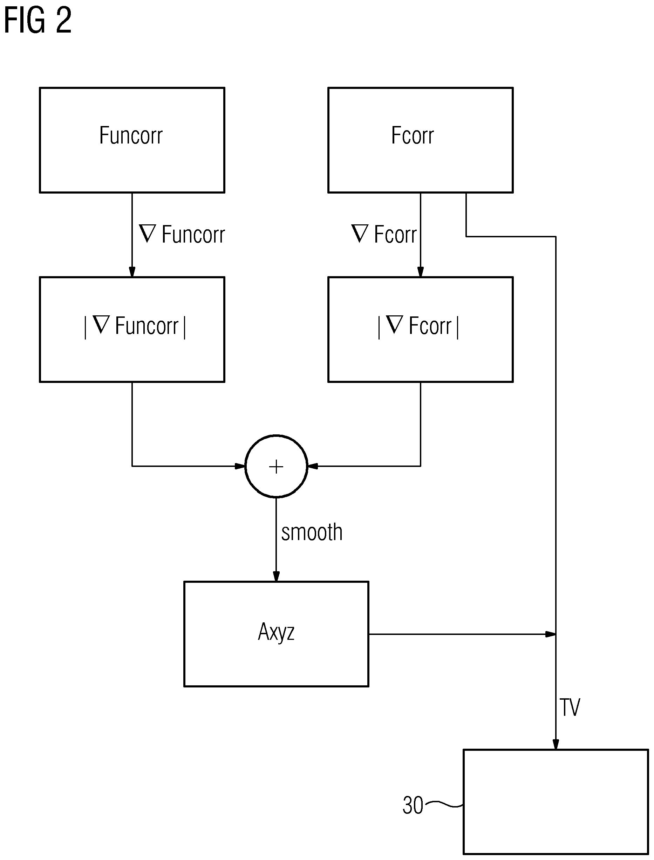

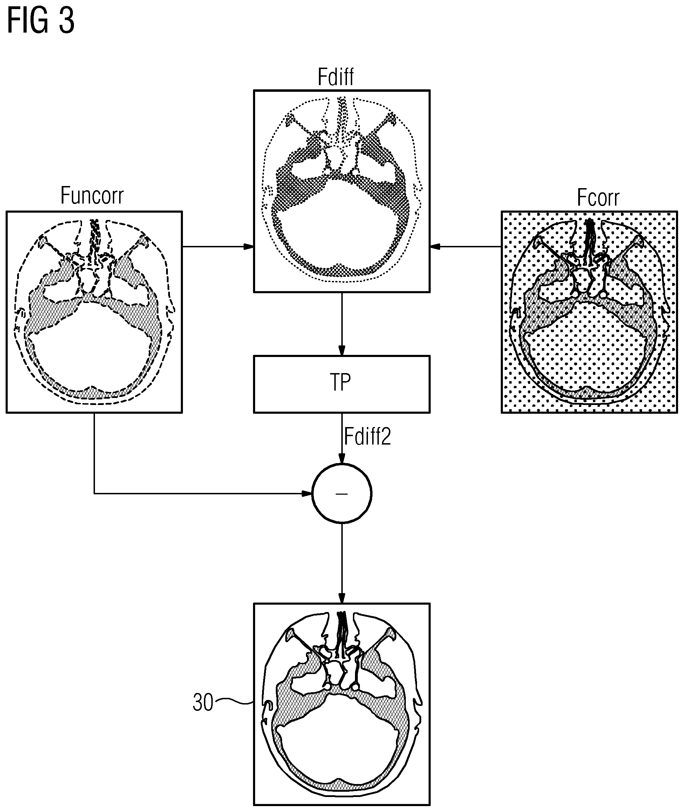

Das Volumenmodell 30 weist bei dem Tomographen 10 einen besonders geringen Streustrahlenanteil oder Artefaktanteil auf und hat dennoch ein ähnliches oder dasselbe Signal-Rausch-Verhältnis wie bei einem Volumenmodell, das ohne eine Streustrahlenkorrektur gebildet ist. Hierzu kann die Analyseeinrichtung 14 eines der beiden im Folgenden anhand von FIG 2 und FIG 3 erläuterten Verfahren durchführen.

Beide im Folgenden erläuterten Verfahren basieren auf einem aus dem Stand der Technik bekannten Verfahren zur Streustrahlenkorrektur. Beispielsweise kann hier eine software-basiert Lösung, beispielsweise basierend auf einem Monte-Carlo-Simulationsansatz, einer deterministischen Rechnung oder einer anderen der bereits beschriebenen Varianten erfolgen. Es kann auch eine messungsbasierte Streustrahlenbestimmung erfolgen, die beispielsweise auf einem Beam-Stop-Array oder einer zeitlichen Primärmodulation (TPM) basieren kann.

Alle bekannten subtraktionsbasierten Streustrahlenkorrekturverfahren liefern im Allgemeinen zwei vollständige CT-Projektionsdatensätze, von denen jeder in der beschriebenen Weise Projektionsbilddatensätze mit zweidimensionalen Bilddaten von Röntgenprojektionen des Objekts darstellen kann. Einer davon ist z.B. ein streustrahlkorrigierter Projektionsdatensatz mit höherem Rauschen, der andere Projektionsdatensatz ein CT-Datensatz ohne Streustrahlkorrektur, jedoch mit geringerem Rauschen.

Ziel der im Folgenden beschriebenen Verfahren ist es, ausgehend von den streustrahlkorrigierten Projektionen einen adaptiven Volumenfilter zur Rauschreduktion innerhalb einer iterativen CT-Rekonstruktion, beispielsweise nach einem ART-Rekonstruktionsansatz, zu verwenden. Das adaptive Volumenfilter kann aus der lokalen Minimierung der totalen Variation (TV) unter Einbeziehung des streustrahlungsbehafteten Datensatzes bestehen. Dies bedeutet, dass in homogenen Bereichen eine stärkere Glättung als in strukturbehafteten Volumenbereichen angewendet wird. Der Grad der Glättung kann dabei mithilfe des streustrahlbehafteten Datensatzes bestimmt werden.

In einem ersten Schritt wird bei beiden Verfahren zunächst das subtraktionsbasierte Streustrahlenkorrekturverfahren bei der Aufnahme der CT-Projektionen verwendet, d.h. der 2D-Röntgenbilddaten P1, P2, P3. Dies liefert die beiden genannten vollständigen CT-Projektionsdatensätze, einen Datensatz mit streustrahlungskorrigierten Projektionen und einen weiteren Datensatz mit streustrahlungsbehafteten Projektionen.

In einem zweiten Schritt wird nun eine iterative CT-Rekonstruktion auf beide Projektionsdatensätze angewendet. Nach jedem Iterationsschritt gehen somit zwei Volumina oder Volumenmodelle $F_{uncorr}$, $F_{corr}$ hervor, wobei das Volumenmodell $F_{uncorr}$ das streubehaftete Volumenmodell und das Volumenmodell $F_{corr}$ das streukorrigierte Volumenmodell sei. Als iterative Konstruktionsmethode kann eine der genannten Methoden zugrunde gelegt werden, also z.B. eine ART-Methode.

Ein dritter Schritt kann nun in der in FIG 2 veranschaulichten Weise oder in der in FIG 3 veranschaulichten Weise erfolgen.

In der ersten Variante gemäß FIG 2 kann nach jeder Iteration eine adaptive Glättung des streustrahlungskorrigierten Volumens $F_{corr}$ durchgeführt werden. Adaptiv bedeutet hierbei, dass die Glättungsoperation Strukturinformationen des unkorrigierten Volumenmodells $F_{uncorr}$ verwendet. Dies ist im Folgenden näher erläutert.

Als Grundlage zur Volumenglättung des Volumenmodells $F_{corr}$ kann ein kantenerhaltendes totales Variationsfilter dienen, wie es weiter unten erläutert wird. Ein totales Variationsfilter ist in anderem Zusammenhang beispielsweise aus der Veröffentlichung von Sidky et al. bekannt (Emil Y. Sidky, Chien-Min Kao, Xiaochuan Pan: "Accurate image reconstruction from few-views and limited-angle data in divergent-beam CT", Journal of X-Ray Science and Technology, Volume 14, pages 119-139, 2006).

Es wird die totale Variation (TV) des strahlenkorrigierten Volumenmodells $F_{corr}$ nach jedem Iterationsschritt minimiert. Wie bei jeder Volumenfilterung kann hierbei die Gefahr bestehen, dass wesentliche Primärinformationen, das heißt Informationen über die Struktur des abgebildeten Körpers, ebenfalls geglättet werden und hierdurch nur noch schwer erkennbar sind. Um dies zu verhindern, kann nun das zweite, nichtstreustrahlkorrigierte Volumenmodell Funcorr verwendet werden. Durch Korrelation der beiden Volumenmodelle Funcorr und Fcorr können nun im Wesentlichen die folgenden zwei Bereiche in einem Volumenmodell identifiziert werden:

- Regionen, die wesentliche Strukturinformationen über den Körper 24 enthalten (zum Beispiel eine Knochenstruktur),
- lokal homogene Regionen, also Regionen ohne signifikante Strukturinformationen.

Pixel eines einzelnen Tomogramms oder Voxels eines gesamten Volumenmodells, die der zweiten Gruppe (homogene Region) zugeordnet werden können, werden nun stärker geglättet als Bereiche aus der ersten Gruppe (Strukturen). Um die beiden Bereiche voneinander zu unterscheiden, kann wie folgt vorgegangen werden:
Es kann nach der folgenden Formel eine Glättungsmaske Axyz berechnet werden.

$$Axyz = \left( \left| \nabla Fcorr \right| + \left| \nabla Funcorr \right| \right)_{smooth}$$

Nach dieser Formel wird also zunächst der Gradient der Dämpfungswerte in beiden Volumenmodellen Fcorr und Funcorr (streustrahlungskorrigiert und unkorrigiert) berechnet und anschließend die Beträge der Gradienten voxelweise oder pixelweise addiert. Das daraus erhaltene Volumenmodell kann nun sehr stark geglättet werden, was durch den Operator ()$_{smooth}$ ausgedrückt ist. Diese Glättung kann beispielsweise wieder mit der Minimierung der totalen Variation der Summe erreicht werden. Es kann aber auch ein anderer Glättungsalgorithmus für eine Volumenglättung oder eine 2D-Glättung verwendet werden. Diese Glättung führt in Bereichen mit hohen Gradienten, also großen Werten für den Absolutwert der Gradienten, und somit wesentlichen Strukturinformationen zu einem hohen oder großen Wert und in Bereichen mit wenig Struktur zu sehr geringen Werten.

Anschließend kann auf Grundlage der Glättungsmaske Axyz das streustrahlungskorrigierte Volumenmodell Fcorr durch Minimierung der totalen Variation TV regionsspezifisch geglättet werden, was die folgende Formel ergibt:

$$\left\| F \right\|_{TV} = \\ \sum_{x,y,z} Axyz \cdot \left( (F_{x,y,z} - F_{x-1,y,z})^2 + \right. \\ \left. (F_{x,y,z} - F_{x,y-1,z})^2 + (F_{x,y,z} - F_{x,y,z-1})^2 \right)^{1/2}$$

wobei die Angabe $F_{xyz}$ für einen Voxelwert des Volumenmodells Fcorr steht, das heißt x,y,z gibt die Koordinate oder Voxel-Ordnungsnummer im Volumenmodell Fcorr an. Der in der obigen Formel angegebene Wert F wird minimiert, was durch $\left\| F \right\|_{TV}$ ausgedrückt ist. Beispielsweise kann mit einem Gradientenabstiegsverfahren minimiert werden. Geeignete Verfahren sind aus dem Stand der Technik hinreichend bekannt.

Das hierdurch erhaltene neue streustrahlkorrigierte Volumenmodell Fcorr kann nun als Grundlage für die nächste Iteration der iterativen CT-Rekonstruktion verwendet werden. Am Ende aller Iterationen erhält man dann das Volumenmodell 30. Beispielsweise können mehr als 10, insbesondere mehr als 50 Iterationen zugrunde gelegt werden.

Alternativ zu dem Schritt der Minimierung eines Werts mittels der Glättungsmaske Axyz kann als dritter Schritt, das heißt als zweite Variante zur Erzeugung eines streustrahlkorrigierten Volumenmodells 30 mit hohem Signal-zu-Rausch-Verhältnis die folgende Variante durchgeführt werden, wozu auf FIG 3 verwiesen wird.

Der vorangegangene Schritt der Berechnung der beiden Volumenmodelle Funcorr und Fcorr liefert nach jeden Iterationsschritt zwei Volumina, das streustrahlkorrigierte Fcorr und das unkorrigierte Funcorr. Diese beiden 3D-Datensätze besitzen, wie bereits beschrieben, folgende Eigenschaften: Funcorr besitzt ein hohes Kontrast-zu-Rausch-Verhältnis bei normalem Rauschanteil, der sich aus der Messanordnung ergibt, und einen hohen Anteil an Streustrahlartefakten, die in axialen Schichten typischerweise als (niederfrequente) radiale Gradienten oder Schattenstrukturen zwischen Hochkontrastobjekten wahrnehmbar sind. Fcorr ist weitestgehend frei von Streustrahlartefakten, besitzt aber ein höheres Bildrauschen als Funcorr.

Der nun beschriebene alternative Ansatz besteht darin, beide Volumenmodelle derart zu fusionieren, dass sich jeweils die vorteilhaften Bildeigenschaften in das Ergebnis der Fusion übertragen. Dazu werden die niederfrequenten Bildanteile des finalen Volumenmodells aus Fcorr und dessen hochfrequente Bildanteile aus Funcorr übernommen. Um diese Fusion robust durchzuführen, kann folgendes Verfahren durchgeführt werden:

In einem Schritt 3a kann ein Differenzvolumenmodell Fdiff = Funcorr - Fcorr berechnet werden. Das Differenzvolumenmodell stellt eine Artefaktkarte dar, in welcher im Wesentlichen nur die Artefakteffekte, die durch Streustrahlen entstanden sind, sichtbar sind. Allerdings können noch Darstellungen von Objektstrukturen von Organen als verhältnismäßig (räumlich) hochfrequente Kontrastverläufe enthalten sein.

In einem Schritt 3b können die Bildanteile aus Fdiff, welche als nicht dem Artefakt Fdiff zugehörig identifiziert werden können, entfernt werden. Insbesondere werden die hochfrequenten Bildanteile aus Fdiff durch Anwendung eines Tiefpassfilters TP entfernt, wobei hier als Bildfilter ein 2D-Gausfilter oder 2D-Medianfilter für Tomogramme und eine entsprechende 3D-Variante für die Filterung eines ganzen Volumenmodells genutzt werden können. Es kann auch wieder die Minimierung der totalen Variation auf Fdiff angewendet werden. Das hierdurch gefilterte Differenzvolumenmodell wird hier als Fdiff2 bezeichnet.

Das gefilterte Differenzvolumenmodell Fdiff2 beschreibt nun eine verbesserte Schätzung des Artefaktanteils, der durch die Streustrahlung erzeugt wurde.

In einem Schritt 3c kann abschließend das initiale, unkorrigierte Volumenmodell Funcorr durch Subtraktion des oben bestimmten Artefaktvolumens Fdiff2 korrigiert werden. Das fusionierte Bildvolumenmodell kann sich somit berech-nen als:

$$\text{Ffinal} = \text{Funcorr} - \text{Fdiff2}.$$

Nach den Schritten 3a, 3b und 3c wird das aus 3c erhaltene finale Volumenmodell Ffinal im nun nachfolgenden Iterationsschritt der iterativen CT-Rekonstruktion als neues streustrahlkorrigiertes Volumenmodell verwendet. Nach der letzten Iteration stellt das dann vorliegende finale Volumenmodell Ffinal das Volumenmodell 30 dar.

Im Wesentlichen sind durch die beiden Verfahren die drei folgenden Verbesserungen gegeben:

1) Die Verfahrenskombination, welche korrigiertes und unkorrigiertes Volumenmodell betrachtet, sodass das korrelierte Rauschverhalten, was sich in beiden Volumenmodellen erkennen lässt, weil es sich um relevante Strukturen des Körpers 24 handelt, wird genutzt, um eine regionsspezifische Glättung zu erhalten.

2) Diese regionsspezifische Glättung kann insbesondere mit der Glättungsmaske Axyz lokal variierend für jedes Pixel oder Voxel ausgestaltet werden, sodass die lokale Struktur- oder Detaildichte berücksichtigt werden kann.

3) Durch die Ergänzung oder Einbettung in ein iteratives Rekonstruktions-Verfahren für die Röntgen-Tomographie ergibt sich der zusätzliche Vorteil, dass zu stark geglättete Strukturen im nächsten Iterationsschritt wieder sichtbar gemacht werden können, weil sie bei der nächsten Iteration wieder aus den unkorrigierten Projektionsbilddaten in das Volumenmodell übernommen werden.

Der zentrale Vorteil der erfindungsgemäßen Methode ist, dass die adaptive Glättung des korrigierten Volumenmodells auf die Strukturinformationen des unkorrigierten Volumenmodells zurückgreift. Die Artefakte der Streustrahlung sind prinzipbedingt unscharf und verändern die Kanteninformation von kleinen, scharf begrenzten Strukturen des Körpers nicht. Dadurch werden diese Strukturen erhalten und können dem unkorrigierten Volumenmodell entnommen werden, ohne dabei Streustrahlungsartefakte mit einzubeziehen. Dadurch werden durch die Rauschunterdrückung keine Artefakte zurück ins korrigierte Volumenmodell übertragen.

Je nach zugrunde gelegtem Verfahren zur Bestimmung der Streukorrektur ist keine zusätzliche Messzeit gegenüber einer regulären Aufnahme notwendig und trotz Korrektur annähernd das gleiche Rauschverhalten wie im unkorrigierten Fall erreicht. Die Bildstrukturen bleiben im größeren Umfang auch bei geringem Kontrast-Rausch-Verhältnis erhalten und werden in diesen Bildbereichen nicht durch die Glättung entfernt. Die Methode ist nicht auf ein einzelnes Verfahren beschränkt und kann grundsätzlich mit allen iterativen Rekonstruktionsverfahren kombiniert werden. Damit ist auch eine Kombination mit weiteren Korrekturverfahren möglich.

Insgesamt ist also durch das Ausführungsbeispiel eine Rauschreduktion bei differenzbasierter Streustrahlenkorrektur innerhalb der iterativen CT-Rekonstruktion mittels adaptiver totaler Variation beschrieben.

**Patentansprüche**

1. Verfahren zum Reduzieren von Rauschen bei einer Tomogramm-(32) und/oder Volumendarstellung (30) eines Objekts (24), wobei bei dem Verfahren aus mehreren streustrahlungsbehafteten Projektionsbilddatensätzen (P1, P2, P3) mindestens ein streustrahlungsbehaftetes Tomogramm (Funcorr), das Streustrahlungsartefakte aufweist, und mindestens ein vorläufiges, mittels einer vorgegebenen Korrekturmethode streustrahlungskorrigiertes Tomogramm (Fcorr) gebildet wird, **dadurch gekennzeichnet, dass**

auf der Grundlage eines im streustrahlungsbehafteten Tomogramm (Funcorr) abgebildeten Kantenverlaufs des Objekts (24) das Rauschen in dem mindestens einen streustrahlungskorrigierten Tomogramm (Fcorr) oder in einer die Streustrahlungsartefakte beschreibenden Artefaktkarte selektiv mittels eines Filters geglättet wird.

2. Verfahren nach Anspruch 1, wobei das Rauschen in dem mindestens einen streustrahlungskorrigierten Tomogramm (Fcorr) geglättet wird und das Glätten mittels eines adaptiven Filters (TV) in Abhängigkeit von dem Kantenverlauf regionsspezifisch durchgeführt wird.

3. Verfahren nach Anspruch 2, wobei zum Adaptieren des Filters (TV) eine Glättungsmaske (Axyz) erzeugt wird, welche für mehrere unterschiedliche Voxel des mindestens einen streustrahlungskorrigierten Tomogramms (Fcorr) einen Glättungsgrad vorgibt.

4. Verfahren nach Anspruch 3, wobei die Glättungsmaske (Axyz) aus Gradientenwerten jedes streustrahlungsbehafteten Tomogramms (Funcorr) und/oder jedes streustrahlungskorrigierten Tomogramms (Fcorr) gebildet wird.

5. Verfahren nach Anspruch 1, wobei auf der Grundlage des streustrahlungsbehafteten Tomogramms (Funcorr) und des streustrahlungskorrigierten Tomogramms (Fcorr) die Artefaktkarte (Fdiff) gebildet und das Rauschen in der Artefaktkarte (Fdiff) geglättet wird.

6. Verfahren nach Anspruch 5, wobei zum Bilden der Artefaktkarte (Fdiff) das streustrahlungsbehaftete Tomogramm (Funcorr) und das streustrahlungskorrigierte Tomogramm (Fcorr) voneinander subtrahiert werden und nach dem Glätten ein rauschreduziertes und streustrahlungskorrigiertes neues Tomogramm durch Subtrahieren der gefilterten Artefaktkarte (Fdiff2) von dem streustrahlungsbehafteten Tomogramm (Funcorr) gebildet wird.

7. Verfahren nach Anspruch 5, wobei die Artefaktkarte (Fdiff) aus den Projektionsbilddatensätzen (P1, P2, P3) vorangegangenen Messungen oder aus einem von den Projektionsbilddatensätzen (P1, P2, P3) verschiedenen Datensatz, insbesondere einem Konstruktionsdatensatz eines Computertomographen (10), gewonnen wird.

8. Verfahren nach einem der vorhergehenden Ansprüche, wobei das Filter ein Total-Variance-Filter (TV) ist.

9. Verfahren nach einem der vorhergehenden Ansprüche, wobei als Korrekturmethode zum Bilden des zumindest einen streustrahlungskorrigierten Tomogramms (Fcorr) eine subtraktionsbasierte Streustrahlenkorrektur verwendet wird, mittels welcher von den Projektionsbilddatensätzen (P1, P2, P3) ein geschätztes Streusignal subtrahiert wird.

10. Verfahren nach einem der vorhergehenden Ansprüche, wobei das streustrahlungskorrigierte Tomogramm (Fcorr) mittels einer iterativen Rekonstruktionsmethode auf der Grundlage der Projektionsbilddatensätze (P1, P2, P3) gebildet wird und bei mehreren oder allen Iterationen mittels des adaptiven Filters (TV) geglättet wird.

11. Verfahren nach Anspruch 10, wobei als iterative Rekonstruktionsmethode eine ART-Methode oder eine SART-Methode oder eine statistischen Methode verwendet wird.

12. Verfahren nach einem der vorhergehenden Ansprüche, wobei die Tomogramme (Fcorr, Funcorr) aus einem streustrahlungsbehafteten und einem streustrahlungskorrigierten Volumenmodell (Funcorr, Fcorr) des Objekts (24) entnommen werden.

13. Computertomograph (10) mit einer Strahlenquelle (20) zum Durchstrahlen eines Objekts (24) aus unterschiedlichen Projektionswinkeln und mit einem Strahlendetektor (22) zum Detektieren der Strahlen und Erzeugen mehrerer Projektionsbilddatensätze (P1, P2, P3) des durchleuchteten Objekts (24), **gekennzeichnet durch**

eine Analyseeinrichtung (14), welche dazu ausgelegt ist, auf der Grundlage der Projektionsdatensätze (P1, P2, P3) ein Verfahren nach einem der vorhergehenden Ansprüche durchzuführen.

**Claims**

1. Method for reducing noise in a tomogram (32) and/or volume rendering (30) of an object (24), wherein, in the method, at least one tomogram (Funcorr) afflicted by stray radiation and having stray radiation artifacts, and at least one preliminary tomogram (Fcorr) corrected in terms of stray radiation by means of a predetermined correction method are formed from a plurality of projection image data records (P1, P2, P3) afflicted by stray radiation,
**characterized in that**
the noise in the at least one tomogram (Fcorr) corrected in terms of stray radiation or in an artifact map describing the stray radiation artifacts is selectively smoothed by means of a filter on the basis of an edge profile of the object (24) imaged in the tomogram (Funcorr) afflicted by stray radiation.

2. Method according to Claim 1, wherein the noise in the at least one tomogram (Fcorr) corrected in terms of stray radiation is smoothed and the smoothing is carried out in a region-specific manner by means of an adaptive filter (TV) in a manner dependent on the edge profile.

3. Method according to Claim 2, wherein a smoothing mask (Axyz) is generated for adapting the filter (TV), which smoothing mask predetermines the degree of smoothing for a plurality of different voxels of the at least one tomogram (Fcorr) corrected in terms of stray radiation.

4. Method according to Claim 3, wherein the smoothing mask (Axyz) is formed from gradient values of each tomogram (Funcorr) afflicted by stray radiation and/or each tomogram (Fcorr) corrected in terms of stray radiation.

5. Method according to Claim 1, wherein the artifact map (Fdiff) is formed on the basis of the tomogram (Funcorr) afflicted by radiation and the tomogram (Fcorr) corrected in terms of stray radiation, and the noise in the artifact map (Fdiff) is smoothed.

6. Method according to Claim 5, wherein the tomogram (Funcorr) afflicted by stray radiation and the tomogram (Fcorr) corrected in terms of stray radiation are subtracted from one another for the purposes of forming the artifact map (Fdiff) and, after smoothing, a noise-reduced and stray-radiation-corrected new tomogram is formed by subtracting the filtered artifact map (Fdiff2) from the tomogram (Funcorr) afflicted by stray radiation.

7. Method according to Claim 5, wherein the artifact map (Fdiff) is obtained from the projection image data records (P1, P2, P3) of preceding measurements or from a data record that differs from the projection image data records (P1, P2, P3), in particular a construction data record of a computed tomography scanner (10).

8. Method according to one of the preceding claims, wherein the filter is a total variance filter (TV).

9. Method according to one of the preceding claims, wherein a subtraction-based stray radiation correction, in which an estimated stray signal is subtracted from the projection image data records (P1, P2, P3), is used as correction method for forming the at least one tomogram (Fcorr) corrected in terms of stray radiation.

10. Method according to one of the preceding claims, wherein the tomogram (Fcorr) corrected in terms of stray radiation is formed by means of an iterative reconstruction method on the basis of the projection image data records (P1, P2, P3), and smoothed in a plurality of, or all, iterations by means of the adaptive filter (TV).

11. Method according to Claim 10, wherein an ART method or a SART method or a statistical method is used as iterative reconstruction method.

12. Method according to one of the preceding claims, wherein the tomograms (Fcorr, Funcorr) are gathered from a stray radiation afflicted and stray radiation corrected volume model (Funcorr, Fcorr) of the object (24).

13. Computed tomography scanner (10) comprising a ray source (20) for passing radiation through an object (24) from different projection angles and comprising a ray detector (22) for detecting the rays and producing a plurality of projection image data records (P1, P2, P3) of the trans-illuminated object (24),
**characterized by**
an analysis device (14) which is configured to carry out a method according to one of the preceding claims on the basis of the projection data records (P1, P2, P3).

**Revendications**

1. Procédé de réduction de bruits dans une image (32) tomographique et/ou de représentation (30) en volume d'un objet (24), dans lequel dans le procédé on forme, à partir de plusieurs jeux (P1, P2, P3) de données d'image de projection, entachés d'un rayonnement de dispersion, au moins une image (Funcorr) tomographique, entachée d'un rayonnement de dispersion, qui a des artefacts de rayonnement de dispersion, et au moins une image (Fcorr) tomographique provisoire, corrigée du rayonnement de dispersion au moyen d'une méthode de correction donnée à l'avance,
   **caractérisé en ce que**
   sur la base d'un tracé de bord, reproduit dans l'image (Funcorr) tomographique, entachée du rayonnement de dispersion, de l'objet (24), on lisse, sélectivement au moyen d'un filtre, le bruit dans la au moins une image (Fcorr) tomographique corrigée du rayonnement de dispersion ou dans une carte d'artefact décrivant les artefacts du rayonnement de dispersion.

2. Procédé suivant la revendication 1, dans lequel on lisse le bruit dans la au moins une image (Fcorr) tomographique corrigée du rayonnement de dispersion et on effectue le lissage d'une manière spécifique à une région au moyen d'un filtre (TV) adaptatif en fonction du tracé de bord.

3. Procédé suivant la revendication 2, dans lequel, pour l'adaptation du filtre (TV), on produit un masque (Axyz) de lissage, qui prescrit un degré de lissage pour plusieurs voxels différents de la au moins une image (Fcorr) tomographique corrigée du rayonnement de la dispersion.

4. Procédé suivant la revendication 3, dans lequel on forme le masque (Axyz) de lissage à partir de valeurs de gradient de chaque image (Funcorr) tomographique entachée du rayonnement de dispersion et/ou de chaque image (Fcorr) tomographique corrigée du rayonnement de dispersion.

5. Procédé suivant la revendication 1, dans lequel, sur la base de l'image (Funcorr) tomographique entachée du rayonnement de dispersion et de l'image (Fcorr) tomographique corrigée du rayonnement de dispersion, on forme la carte (Fdiff) d'artefact et on lisse le bruit dans la carte (Fdiff) d'artefact.

6. Procédé suivant la revendication 5, dans lequel, pour former la carte (Fdiff) d'artefact, on soustrait l'une de l'autre l'image (Funcorr) tomographique entachée du rayonnement de dispersion de l'image (Fcorr) tomographique corrigée du rayonnement de dispersion et, après le lissage, on forme une nouvelle image tomographique à bruit réduit et corrigée du rayonnement de dispersion, en soustrayant la carte (Fdiff2) d'artefact filtrée de l'image (Funcorr) tomographique entachée du rayonnement de dispersion.

7. Procédé suivant la revendication 5, dans lequel on obtient la carte (Fdiff) d'artefact à partir de mesures précédentes les jeux (P1, P2, P3) de données d'image de projection ou d'un jeu de données différent des jeux (P1, P2, P3) de données d'image de projection, notamment d'un jeu de données de construction d'une image (10) tomographique d'ordinateur.

8. Procédé suivant l'une des revendications précédentes, dans lequel le filtre est un filtre (TV) à variance totale.

9. Procédé suivant l'une des revendications précédentes, dans lequel on utilise, comme méthode de correction, pour former la au moins une image (Fcorr) tomographique corrigée du rayonnement de dispersion, une correction du rayonnement de dispersion soustractive, au moyen de laquelle on soustrait un signal de dispersion estimé des jeux (P1, P2, P3) de données d'image de projection.

10. Procédé suivant l'une des revendications précédentes, dans lequel on forme l'image (Fcorr) tomographique corrigée du rayonnement de dispersion au moyen d'une méthode de reconstruction par itération, sur la base des jeux (P1, P2, P3) de données d'image de projection et on lisse, au moyen du filtre (TV) adaptatif dans plusieurs ou dans toutes les itérations.

11. Procédé suivant la revendication 10, dans lequel on utilise, comme méthode de reconstruction par itération, une méthode ART ou une méthode SART ou une méthode statistique.

12. Procédé suivant l'une des revendications précédentes, dans lequel on prélève les images (Fcorr, Funcorr) tomographiques d'un modèle (Funcorr, Fcorr) en volume, entaché du rayonnement de dispersion et corrigé du rayonnement de dispersion, de l'objet (24).

13. Tomographe (10) par ordinateur, ayant une source (20) de rayonnement pour exposer un objet (24) à partir d'angles de projection différents et comprenant un détecteur (22) de rayonnement pour détecter le rayonnement et produire plusieurs jeux (P1, P2, P3) de données d'image de projection de l'objet (24) exposé,
**caractérisé par**
un dispositif (14) d'analyse, conçu pour effectuer, sur la base des jeux (P1, P2, P3) de données de projection, un procédé suivant l'une des revendications précédentes.

FIG 1

P1,P2,P3

# FIG 2

Funcorr

$\nabla$ Funcorr

$|\nabla$ Funcorr$|$

Fcorr

$\nabla$ Fcorr

$|\nabla$ Fcorr$|$

$+$

smooth

Axyz

TV

30

# FIG 3

Fdiff

Funcorr

Fcorr

TP

Fdiff2

−

30

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006046191 A1
- US 20090252430 A1

**In der Beschreibung aufgeführte Nicht-Patentliteratur**

- **EMIL Y. SIDKY ; CHIEN-MIN KAO ; XIAOCHUAN PAN.** Accurate image reconstruction from few-views and limited-angle data in divergent-beam CT. *Journal of X-Ray Science and Technology,* 2006, vol. 14, 119-139